# EUROPÄISCHE PATENTSCHRIFT

(11) **EP 0 777 830 B1**
(45) Veröffentlichungstag und Bekanntmachung des Hinweises auf die Patenterteilung: **22.12.1999**
(21) Anmeldenummer: 95934062.1
(22) Anmeldetag: 17.08.1995
(51) Int. Cl.: F16D 65/16, F16D 55/22, B22C 9/04, B22D 19/00

(54) **BREMSSATTEL FÜR SCHEIBENBREMSE**
DISK BRAKE CALLIPER
ETRIER POUR FREIN A DISQUE

(30) Priorität: 31.08.1994 DE 4430957
(43) Veröffentlichungstag der Anmeldung: 11.06.1997
(73) Patentinhaber: Continental Teves AG & Co. oHG, 60488 Frankfurt (DE)
(72) Erfinder: DÖLL, Andreas, D-60439 Frankfurt am Main (DE); THIEL, Rudolf, D-60488 Frankfurt am Main (DE)
(86) Internationale Anmeldenummer: EP9503265
(87) Internationale Veröffentlichungsnummer: WO9607033

(56) Entgegenhaltungen:
- WO-A-93/06382
- DE-A- 3 336 304
- DE-A- 4 236 084
- DE-C- 3 642 978
- DE-C- 4 244 502
- GB-A- 2 079 653
- US-A- 4 100 669
- US-A- 4 916 789
- PATENT ABSTRACTS OF JAPAN vol. 18 no. 491 (M-1672) ,13.September 1994 & JP,A,61 059405 (TOYOTA MOTOR) 7.Juni 1994,

## Beschreibung

Die Erfindung betrifft einen Bremssattel für Scheibenbremsen gemäß dem Oberbegriff des Patentanspruchs 1.

An die Leistungsfähigkeit moderner Scheibenbremsen werden immer höhere Anforderungen gestellt. So soll die Bremse selbst und insbesondere das Bremssattelgehäuse einerseits leicht sein, um die ungefederten Massen am Fahrzeugrad zu minimieren, andererseits muß der Bremssattel sehr steif sein, damit er sich unter starker Belastung nicht zu sehr verbiegt.

Um Gewicht einzusparen ist man daher zunehmend dazu übergegangen, statt der bisher üblichen Eisenwerkstoffe, Aluminiumlegierungen für den Bremssattel zu verwenden. Aluminiumlegierungen haben jedoch den Nachteil, daß bei Temperaturen über 300° Celsius die Festigkeit nachläßt. Solche Temperaturen können bei Scheibenbremsen im Extremfall durchaus auftreten. Zur Lösung dieses Problems bieten sich Materialien an, die unter der Bezeichnung Metall Matrix Verbundwerkstoffe bekannt geworden sind. Dabei handelt es sich um Verbundwerkstoffe aus Metall und Keramikteilchen oder Fasern unterschiedlichster Länge. Zum Gießen von Bremssätteln eignet sich insbesondere ein Verbundwerkstoff aus Aluminium und Keramikteilchen, beispielsweise Siliciumkarbid-Teilchen.

Ein derartiger Metall Matrix Verbundwerkstoff mit Keramikteilchen ist wesentlich weniger nachgiebig als Aluminiumlegierungen. Er erlaubt die Konstruktion von Leichtbaubremsen, die im Bauraum gegenüber Bremsen aus Aluminium wesentlich reduziert sind und dennoch eine hohe Festigkeit aufweisen. Ein Nachteil dieses Verbundwerkstoffs ist seine große Härte, die auf die Keramikteilchen zurückzuführen ist. Ein gegossenes Rohteil für ein Sattelgehäuse kann daher nur sehr schwer nachbearbeitet werden, um beispielsweise ein Gewinde für den Druckanschluß oder eine Dichtringnut im Bremszylinder einzubringen. Die Bearbeitung ist mühsam, teuer und nur mit Diamantwerkzeugen möglich, wenn man nicht minimale Standzeiten für die Werkzeuge in Kauf nehmen will. Eine Nachbearbeitung verbietet sich daher aus wirtschaftlichen Gründen.

Für das Gießen von Metall Matrix Verbundwerkstoffen bietet sich daher das bekannte "Lost-Foam-Verfahren" an. Bei diesem Verfahren wird ein Hartschaumkern des Sattelgehäuses hergestellt, der in einer Gießform in Sand eingebettet und anschließend mit dem Metall Matrix Verbundwerkstoff abgegossen wird. Mit diesem Verfahren ist es möglich, Hinterschneidungen zu gießen, so daß das Rohteil zumindest in Bezug auf Hinterschneidungen nicht nachbearbeitet werden muß. Damit werden schon einige Nachbearbeitungsschritte eingespart. An anderen Stellen ist aber trotzdem eine Nachbearbeitung nötig, insbesondere wenn es auf geringste Toleranzen ankommt, die im Guß nicht erreicht werden können. Dies ist regelmäßig der Fall bei Gewindeanschlüssen, Kolbenbohrungen, Nuten oder Einstichen.

Im Zusammenhang mit der Verwendung von Metall Matrix Verbundwerkstoffen ist in der WO 93/06382 ein gegossener Bremssattel beschrieben, der keramische Einlegeteile beinhaltet. Während des Gießens des Sattels ensteht damit bereichsweise, d. h. in den Sattolzonen mit keramischen Einlegeteilen, ein Metall Matrix Verbundwerkstoff, durch Infiltration der Einlegeteile mit dem Gußwerkstoff. Die keramischen Einlegeteile sparen dabei solche Sattelzonen aus, die einer späteren mechanischen Bearbeitung zugänglich gemacht werden sollen. In den letztgenannten Bereichen liegt damit der metallische Gußwerkstoff vor, der auf bekannte Art und Weise mechanisch zu bearbeiten ist. Die besondere Schwierigkeit einer derartigen Anordnung besteht in der toleranzgenauen Fixierung der Einlegeteile innerhalb der Gießform, insbesondere bei Verwendung mehrerer Einlegeteile. Darüber hinaus sind die Zwischenbereiche zwischen verschiedenen Einlegeteilen, die aus reinem metallischen Gußwerkstoff bestehen, aufgrund ihrer Materialeigenschaften anfällig für Beschädigungen infolge hoher Belastung.

Aufgabe der Erfindung ist es, einen Bremssattel anzugeben, der aus einem Metall Matrix Verbundwerkstoff besteht und bei dem eng tolerierte Ausgestaltungen wie Gewindeanschlüsse, Kolbenbohrungen oder Nuten wirtschaftlich herstellbar sind.

Die Lösung der Aufgabe ergibt sich aus dem kennzeichnenden Teil des Patentanspruchs 1. Im Prinzip besteht die Lösung darin, daß die für eine genaue Nachbearbeitung vorgesehenen Stellen des Sattelgehäuses aus einem weicheren und leichter bearbeitbaren Material, insbesondere einer Aluminiumlegierung gebildet werden. Das Einbringen des leicht bearbeitbaren Materials geschieht dabei in Form von Einlegeteilen, die in einer ersten Ausführungsform gemäß den Merkmalen des Verfahrensanspruchs 8 in den Hartschaumkern des Sattelgehäuses eingebettet werden und die beim Abgießen mit dem Metall Matrix Verbundwerkstoff umgossen werden und mit diesem eine innige Verbindung eingehen. Anschließend kann das entstandene Rohteil durch Bearbeiten der Einlegeteile fertiggestellt werden.

Einlegeteile werden insbesondere verwendet bei dem Bremszylinder und bei dem Druckanschluß für die Hydraulikflüssigkeit. Zweckmäßigerweise wird auch eine Entlüfteröffnung mit einem Einlegeteil versehen. In einer Weiterbildung der Erfindung wird die innige Verbindung zwischen den Einlegeteilen und dem Metall Matrix Verbundwerkstoff noch verbessert, indem die Einlegeteile mit einer Verzahnung oder Riefelung versehen sind.

In einer zweiten Ausführungsform der Erfindung sind die Einlegeteile nicht eingegossen. In diesem Fall wird das Sattelgehäuse gemäß dem in Anspruch 9 beschriebenen Verfahren hergestellt. Dabei wird zuerst ein Gehäuserohteil aus Metall Matrix Verbundwerkstoff gefertigt. Die Einlegeteile werden separat gegossen und fertig bearbeitet und anschließend in das Gehäuserohteil eingesetzt. In einer bevorzugten Ausführungsform kommt man mit einem einzigen kombinierten Einlegeteil für den Bremszylinder und den Druckanschluß aus, das in die genau gegossene Zylinderöffnung eingesetzt wird. Dabei kann das kombinierte Einlegeteil durch Einpressen in seiner Einbauposition gehalten werden oder durch eine Schraube am Druckanschluß gesichert und mit dem Gehäuserohteil verbunden sein.

Ausführungsbeispiele der Erfindung werden nachfolgend anhand der Zeichnungen näher erläutert.

Es zeigen:
- Figur 1: einen Schnitt durch einen Hartschaumkern mit einem Einlegeteil im Bremszylinder, formgleich mit einem gegossenen Sattelrohteil vor der Nachbearbeitung;
- Figur 2: eine teilweise Darstellung des Rohteils von Figur 1 in einer anderen Schnittebene;
- Figur 3: das Sattelrohteil von Figur 1 nach Ausführung der Nachbearbeitung;
- Figur 4: eine Darstellung wie Figur 2, nach Ausführung der Nachbearbeitung;
- Figur 5: ein zweites Ausführungsbeispiel der Erfindung mit einem einzigen und geriefelten Einlegeteil, in einer Darstellung entsprechend Figur 2;
- Figur 6: das Ausführungsbeispiel von Figur 5 nach Ausführung der Nachbearbeitung;
- Figur 7: eine weitere Ausführungsform der Erfindung mit einem fertig bearbeiteten und festgeschraubten Einlegeteil, in einer Darstellung entsprechend Figur 3.

In den Figuren erkennt man einen Bremssattel für Scheibenbremsen mit einem Sattelgehäuse 1, das einen hydraulischen Bremszylinder 2 und einen Druckanschluß 3 für die Versorgung mit Hydraulikflüssigkeit aufweist. Das Sattelgehäuse 1 besteht im wesentlichen aus einem Metall Matrix Verbundwerkstoff auf der Basis von Aluminium mit Keramikpartikeln.

In einer ersten Ausführungsform der Erfindung ist der Bremszylinder 2 mit einem ersten Einlegeteil 4 und der Druckanschluß 3 mit einem zweiten Einlegeteil 5 aus einer Aluminiumlegierung versehen. Die Einlegeteile 4,5 sind weicher als der Metallmatrixverbundwerkstoff und daher auch mit normalen Werkzeugen leicht zu bearbeiten.

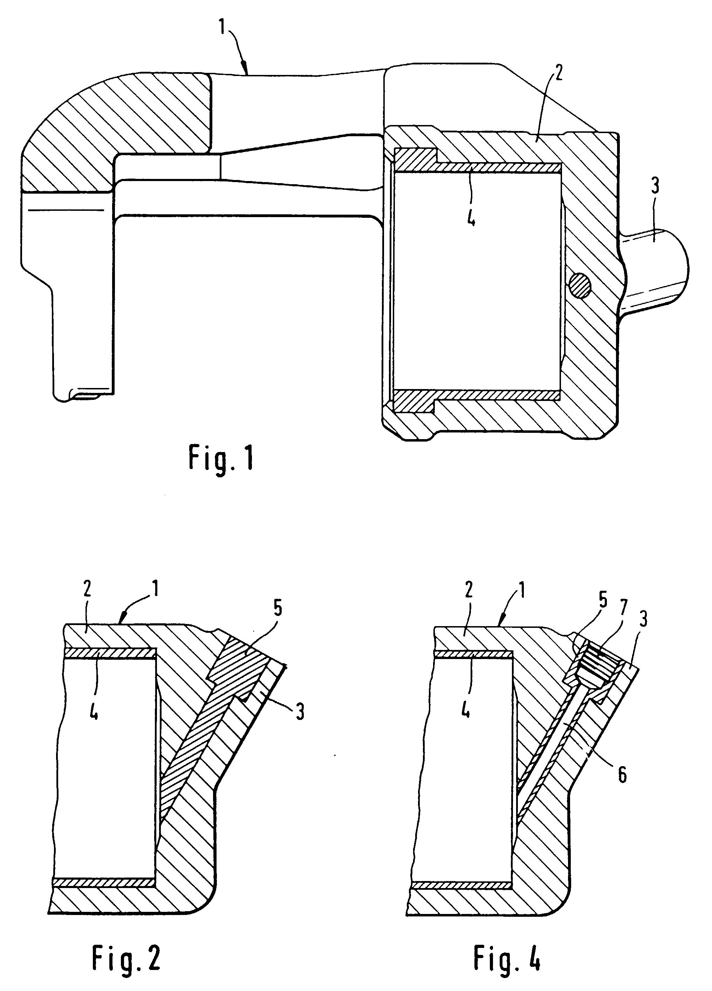

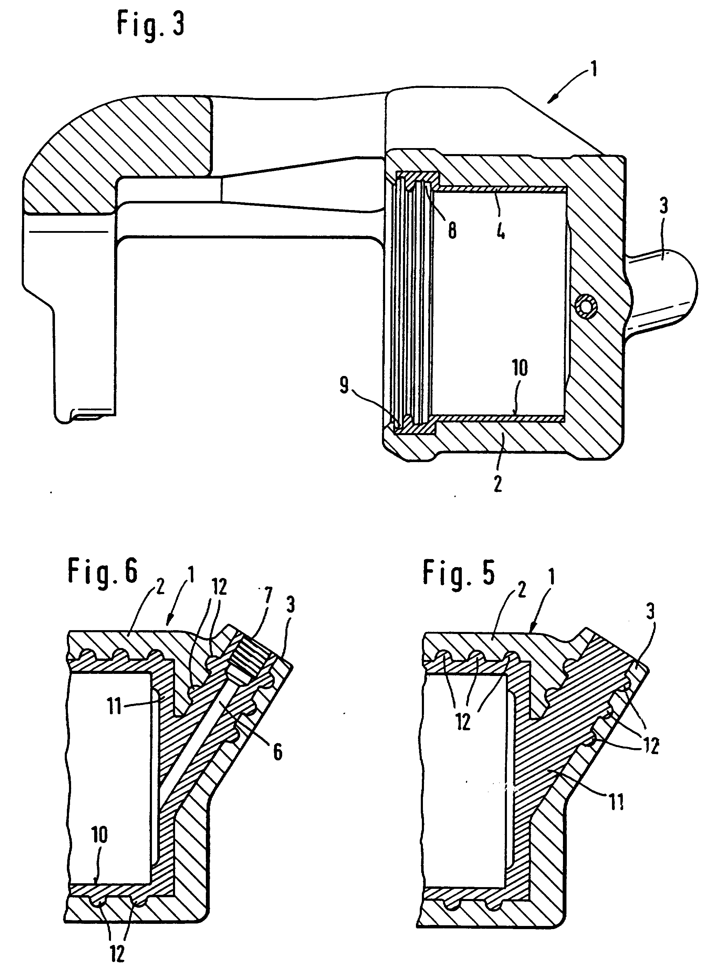

Die Herstellung des Sattelgehäuses 1 geschieht im "Lost-Foam-Guß". Dabei wird zunächst ein Hartschaumkern in Form des Sattelgehäuses 1 hergestellt und mit den Einlegeteilen 4,5 versehen. Wegen der Formgleichheit des Hartschaumkerns mit dem Sattelgehäuse 1 kann Figur 1 auch als eine Darstellung des Hartschaumkerns angesehen werden. Der Hartschaumkern wird nun in einer Gießform in Sand eingebettet und mit dem Metall Matrix Verbundwerkstoff abgegossen, wobei der Hartschaumkern verbrennt und die Einlegeteile 4,5 vom Verbundwerkstoff umgossen werden und mit diesem eine innige Verbindung eingehen. Das entstandene Rohteil des Sattelgehäuses 1 entspricht den Darstellungen in den Figuren 1 und 2. Anschließend wird das Rohteil durch Nachbearbeiten der Einlegeteile 4,5 fertiggestellt. Dabei wird, wie in Figur 4 gezeigt, ein Kanal 6 und ein Gewinde 7 für den Druckanschluß 3 in das Einlegeteil 5 eingebracht. Beim Einlegeteil 4 wird gemäß der Darstellung von Figur 3 eine Dichtringnut 8 und eine Schutzkappennut 9 eingebracht und die Zylinderbohrung 10 nachbearbeitet.

In einer Variante der Erfindung ist für den Druckanschluß 3 und den Bremszylinder 2 nur ein einziges Einlegeteil 11 vorgesehen, das einstückig ausgestaltet und an seinen Außenwänden mit Riefelungen 12 für einen verbesserten Formschluß versehen ist. Die Nachbearbeitung erfolgt genauso wie beim ersten Ausführungsbeispiel durch Einbringen eines Kanals 6 und eines Gewindes 7 in den Druckanschluß 3 (Figur 6) und durch Nachbearbeiten der Zylinderbohrung 10 und der in Figur 6 nicht gezeigten Dichtringnut 8 sowie der Schutzkappennut 9.

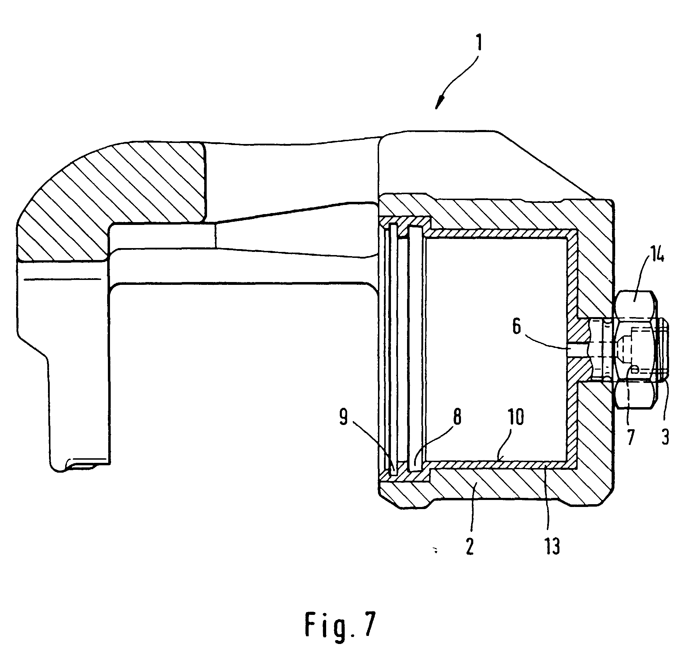

Eine zweite Ausführungsform der Erfindung ist in Figur 7 dargestellt. Hier wird ein modifiziertes Einlegeteil 13 verwendet, das einstückig ausgestaltet und für den Einsatz im Bremszylinder 2 und im Druckanschluß 3 kombiniert ist. Das Einlegeteil 13 ist jedoch nicht eingegossen. Vielmehr wird bei der Herstellung des Sattelgehäuses 1 zunächst ein Rohteil im "Lost-Foam-Guß" hergestellt, welches jedoch nur aus dem Metall Matrix Verbundwerkstoff besteht. Das Einlegeteil 13 wird aus einer Aluminiumlegierung separat gegossen und fertig bearbeitet, wobei der Kanal 6, das Gewinde 7, die Zylinderbohrung 10, die Dichtringnut 8 und die Schutzkappennut 9 eingebracht werden. Das fertig bearbeitete Einlegeteil 13 wird nun in das Gehäuserohteil eingesetzt und mittels einer Schraubverbindung durch Aufschrauben einer Mutter 14 am Sattelgehäuse 1 befestigt und gesichert.

Selbstverständlich kann die Erfindung mit Vorteil auch auf die Fertigung und Ausgestaltung eines Bremsenhalters ausgedehnt werden, mit dem der Bremssattel am Achsschenkel des Kraftfahrzeugs befestigt und axial verschiebbar geführt wird.

## Patentansprüche

1. Bremssattel für Scheibenbremse, mit einem im wesentlichen aus einem Metall Matrix Verbundwerkstoff bestehenden Sattelgehäuse (1), das einen hydraulischen Bremszylinder (2) und einen Druckanschluß (3) für Hydraulikflüssigkeit aufweist, dadurch **gekennzeichnet,** daß das Sattelgehäuse (1) zumindest lokal im Bereich des Bremszylinders (2) und/oder des Druckanschlußes (3) mit einem oder mehreren Einlegeteilen (4,5,11,13) aus einem leicht bearbeitbaren Material versehen sind, wobei die Einlegeteile (4,5,11,13) aus Aluminium oder einer Aluminiumlegierung mit einem gegenüber dem Metall Matrix Verbundwerkstoff erhöhten Schmelzpunkt bestehen.

2. Bremssattel nach Anspruch 1, dadurch **gekennzeichnet,** daß die Einlegeteile (4,5,11) eingegossen sind.

3. Bremssattel nach einem der Ansprüche 1 oder 2, dadurch **gekennzeichnet,** daß eine Entlüfteröffnung mit einem Einlegeteil versehen ist.

4. Bremssattel nach einem der Ansprüche 1 bis 3, dadurch **gekennzeichnet,** daß die Einlegeteile (11) mit einer Verzahnung oder Riefelung (12) versehen sind.

5. Bremssattel nach Anspruch 1, dadurch **gekennzeichnet,** daß ein kombiniertes Einlegeteil (13) für den Bremszylinder (2) und den Druckanschluß (3) in die gegossene Zylinderöffnung eingesetzt oder eingepreßt ist.

6. Bremssattel nach Anspruch 5, dadurch **gekennzeichnet,** daß das kombinierte Einlegeteil (13) durch eine Schraubverbindung (14) am Druckanschluß (3) gesichert und mit dem Sattelgehäuse (1) verbunden ist.

7. Verfahren zur Herstellung eines Bremssattels nach einem der Ansprüche 1 bis 4, **gekennzeichnet** durch folgende Verfahrensschritte:
- Ein Hartschaumkern ("Foam-Teil") des Sattelgehäuses (1) wird hergestellt und mit Einlegeteilen (4,5,11) versehen;
- der Hartschaumkern wird in einer Gießform vorzugsweise in Sand eingebettet und mit Metall Matrix Verbundwerkstoff abgegossen, wobei der Hartschaumkern verbrennt ("Lost-Foam-Guß") und die Einlegeteile (4,5,11) vom Verbundwerkstoff umgossen werden und mit diesem eine innige Verbindung eingehen;
- das entstandene Rohteil wird durch Nachbearbeiten der Einlegeteile (4,5,11) fertiggestellt, wobei insbesondere ein Kanal (6) und ein Gewinde (7) für den Druckanschluß (3) und eine Dichtringnut (8) im Bremszylinder eingebracht werden können.

8. Verfahren zur Herstellung eines Bremssattels nach einem der Ansprüche 5 oder 6, **gekennzeichnet** durch folgende Verfahrensschritte:
- Ein Hartschaumkern des Sattelgehäuses (1) wird hergestellt und in einer Gießform vorzugsweise in Sand eingebettet und mit Metall Matrix Verbundwerkstoff abgegossen, wobei der Hartschaumkern verbrennt ("Lost-Foam-Guß") ;
- das oder die Einlegeteile (13) werden separat gegossen und fertig bearbeitet;
- das oder die Einlegeteile (13) werden in das Gehäuserohteil eingesetzt oder eingepreßt und gegebenenfalls mit einer Schraubverbindung (14) gesichert.

## Claims

1. Brake caliper for a disc brake, having a caliper housing (1) which is essentially made up of a metal-matrix composite material and has a hydraulic brake cylinder (2) and a supply connection (3) for hydraulic fluid,
**characterized** in that the caliper housing (1), at least locally in the area of the brake cylinder (2) and/or the supply connection (3), is provided with one or more insert pieces (4,5,11,13) made of material which is easy to machine, the inserts (4,5,11,13) consisting of aluminum or an aluminum alloy with a melting point raised in comparison with the metal-matrix composite material.

2. Brake caliper as claimed in claim 1,
**characterized** in that the insert pieces (4,5,11) are cast in.

3. Brake caliper as claimed in any one of claims 1 or 2,
**characterized** in that an insert is provided for a bleeder opening.

4. Brake caliper as claimed in any one of claims 1 to 3,
**characterized** in that the insert pieces (11) include a denticulation or fluting (12).

5. Brake caliper as claimed in claim 1,
**characterized** in that a combined insert piece (13) for the brake cylinder (2) and the supply connection (3) is inserted or pressed into the cast cylinder opening.

6. Brake caliper as claimed in claim 5,
**characterized** in that the combined insert piece (13) is secured by a threaded coupling (14) to the supply connection (3) and is connected to the caliper housing (1).

7. Process for the manufacture of a brake caliper as claimed in any one of claims 1 to 4,
**characterized** by the following process steps:
- a high-resistance foam core ("foam piece") of the caliper housing (1) is manufactured and provided with insert pieces (4,5,11);
- the high-resistance foam core is embedded in a casting mould, preferably in sand, and cast using a metal-matrix composite material such that the high-resistance foam core is burned up ("lost-foam casting") and the insert pieces (4,5,11) are laminated by the composite material and enter into a tight connection with it;
- the resulting unfinished piece is completed by subsequent machining of the insert pieces (4,5,11) such that in particular a channel (6) and a threading (7) for the supply connection (3), and a gasket ring groove (8) can be provided in the brake cylinder.

8. Process for the manufacture of a brake caliper as claimed in any one of claims 5 or 6,
**characterized** by the following process steps:
- a high-resistance foam core of the caliper housing (1) is manufactured and embedded in a casting mold, preferably in sand, and cast using a metal-matrix composite material such that the high-resistance foam core is burned up ("lost-foam casting");
- the insert piece(s) (13) is (are) cast separately and finished;
- the insert piece(s) (13) is (are) inserted or pressed into the unfinished housing piece and secured, if necessary, using a threaded coupling (14).

## Revendications

1. Étrier de frein, pour frein à disque, comprenant un boîtier d'étrier (1) qui est constitué essentiellement d'une matière composite métal matrice et qui comporte un cylindre de frein hydraulique (2) et un raccord de pression (3) pour un liquide hydraulique, caractérisé en ce que le boîtier d'étrier (1) est pourvu, au moins localement dans la zone du cylindre de frein (2) et/ou du raccord de pression (3), d'une ou plusieurs pièces d'insertion (4, 5, 11, 13) en une matière facilement usinable, les pièces d'insertion (4, 5, 11, 13) étant en aluminium ou en un alliage d'aluminium à point de fusion plus élevé que la matière composite métal matrice.

2. Étrier de frein suivant la revendication 1, caractérisé en ce que les pièces d'insertion (4, 5, 11) sont mises en place au moulage par coulée.

3. Étrier de frein suivant l'une des revendications 1 ou 2, caractérisé en ce qu'une ouverture d'évacuation d'air est pourvue d'une pièce d'insertion.

4. Étrier de frein suivant l'une des revendications 1 à 3, caractérisé en ce que les pièces d'insertion (11) sont pourvues d'une forme dentée ou une forme rainurée (12).

5. Étrier de frein suivant la revendication 1, caractérisé en ce qu'une pièce d'insertion (13) combinée prévue pour le cylindre de frein (2) et le raccord de pression (3) est placé ou emboîté à force dans l'ouverture de cylindre obtenue par moulage par coulée.

6. Étrier de frein suivant la revendication 5, caractérisé en ce que la pièce d'insertion (13) combinée est immobilisée sur le raccord de pression (3) au moyen d'une liaison vissée (14) et est reliée au boîtier d'étrier (1).

7. Procédé de réalisation d'un étrier de frein suivant l'une des revendications 1 à 4, caractérisé par les étapes de procédé suivantes :
- un noyau de mousse dure ("pièce de mousse") correspondant au boîtier d'étrier (1) est réalisé et est pourvu de pièces d'insertion (4, 5, 11),
- le noyau de mousse dure est enrobé, de préférence dans du sable, dans un moule et reçoit par infiltration une matière composite métal matrice coulée, le noyau de mousse dure faisant l'objet d'une combustion (coulée par mousse perdue), tandis que les pièces d'insertion (4, 5, 11) sont entourées par la matière composite à la coulée et entrent en combinaison intime avec celle-ci,
- la pièce brute obtenue fait l'objet d'une finition par usinage après-coup des pièces d'insertion (4, 5, 11), ce qui permet de ménager notamment un conduit (6) et un filetage (7), pour le raccord de pression (3), et une gorge de bague d'étanchéité (8) dans le cylindre de frein.

8. Procédé de réalisation d'un étrier de frein suivant l'une des revendications 5 ou 6, caractérisé par les étapes de procédé suivantes :
- un noyau de mousse dure correspondant au boîtier d'étrier (1) est réalisé et est enrobé, de préférence dans du sable, dans un moule et reçoit par infiltration une matière composite métal matrice coulée, le noyau de mousse dure faisant l'objet d'une combustion (coulée par mousse perdue),
- la ou les pièces d'insertion (13) font l'objet séparément d'un moulage et d'une finition par usinage,
- la ou les pièces d'insertion (13) sont posées ou emboîtées à force dans la pièce brute de boîtier et sont éventuellement immobilisées au moyen d'une liaison vissée (14).
